Europäisches Patentamt

European Patent Office

Office européen des brevets

(11) Veröffentlichungsnummer: **0 103 902**
A2

(12) # EUROPÄISCHE PATENTANMELDUNG

(21) Anmeldenummer: 83109416.4

(22) Anmeldetag: 22.09.83

(51) Int. Cl.³: **F 24 B 1/18**
F 24 B 13/02, A 23 B 4/04

(30) Priorität: 22.09.82 DE 3235022
25.03.83 DE 3310922

(43) Veröffentlichungstag der Anmeldung:
28.03.84 Patentblatt 84/13

(84) Benannte Vertragsstaaten:
AT CH DE FR GB IT LI NL SE

(71) Anmelder: Toru, Uno
Lornsenhof 7
D-2390 Flensburg(DE)

(72) Erfinder: Toru, Uno
Lornsenhof 7
D-2390 Flensburg(DE)

(54) Verbrennung der festen Brennmaterialblöcke durch Anzündung der in einem bestimmten Abstand stehenden Brennmaterialflächen mit Hilfe des Verbrennungssockels.

(57) Die mit einen kleinen Abstand stehenden und mit vertikalen durchgehenden Einschnitten verzehenden Brennmaterialflachen sind leicht Anzündbar. Bei einen Verbrennungsprozeß, der in einen solchen engen Raum, wo die laterale Warmeentweichung vermindert ist und die brennenden Flachen sich gegenseitig aufheizen, bleib für die Verbrennung nötige hohe Temperatur gut erhalten. Derentstandene Durchzug sorgt für die Sauerstoffzufuhr. Dabei hilft ein Sockel, der die Brennmaterialblöcke stützt, den Abstand zwischen ihnen reguliert, den freien Luftzufluß ermöglict und die Vorwarmung des Brennmaterials fördert. Auf diesem Weise ist ein gleichmaßige Holzverbrennung auch in miniaturen Formen erreichbar. Auf dieser Basis sind eine Reihe Brennholzblöcke mit verschiedenen Einschnitten und Größen vorgesehen, die einzeln oder Komplett auf speziellem Verbrennungssockel verbrennt werden. Es wird eine neue Kaminvorrichtung, eine Herd und Einrichtung für Kohlenheizen angeboten. Es ist auch rauchern mit Festen Brennmaterial vorgesehen.

EP 0 103 902 A2

Verbrennung der Festen Brennmaterialsblöcke durch Anzündung der in einem bestimmten Abstand stehenden Brennmaterialflächen mit Hilfe der Verbrennungssockels.

Die Erfindung bezieht sich auf die Anwendung der Verbrennung der Festen Brennmaterialblöcke durch
Anzündung die mit einen bestimmten Abstand stehenden
Brennmaterialflächen mit Hilfe des Verbrennungssockels
für Anwendung in Kaminvorrichtungen, für Feueranzünden,
als Brennmaterial, für Holzkohleeinrichtungen und für die
Rauch- und Wärmeherstellung beim räuchern.

Eine der breitest verwendeten Festen Brennmaterialien
ist das Brennholz. Für die verbrennung wird das Holz
meistens im Form eines Holzscheites verwendet. Die
gleichmäßige Holzverbrennung kann nur unter der Bedingung stattfinden, daß sich auf der brennenden Holzfläche
ein Raum mit Luftzufluß und mit einer entsprechenden hoher Temperatur befindet, wo die aus dem Holz herauskommenden Gase sich mit dem in der Luft befindenen Sauerstoff verbinden kann. Darum stellte man beim traditioneller Holzfeuer 3 oder mehr Holzscheite zusammen, daß
zwischen ihnen ein Hohlraum - den können wir bedingt auch
Verbrennungskammer nennen - entsteht. Bei solchen Feuer
brennen gleichzeitig alle Holzscheite. Die bei der Holzverbrennung entstandener Gase (Rauch) verwendet man für
die Räucherung der Lebensmittel (Fleisch, Fisch, Käse,
Obst) sowie für Konservierung und Färbung. Für die Herstellung des Rauches verbrennt man Holzscheite oder kombiniert: Holzscheite (auch Holzkohle) und speziel dafür
gefertigtes Sägemehl und Späne.

Bei einem Feuer aus übereinander zusammengesetzten Holzscheiten wo gleichzeitig alle Holzscheite brennen, müssen die Kaminvorrichtungen eine entsprechende Größe haben. Diese Vorbedingung setzt einen großen und schweren
Kamin voraus. Beim räuchern ist es unbequem die Anwendung
des kombinierten Brennmaterials. Die Rauchmenge sowie
Temperatur in der Räucherkammer ist bei zum Haushalt gerenden Räuchereien schwer regulierbar, so daß ein
erfolg nicht selten vorkommt.

Der Erfindung liegt die Aufgabe zugrunde, daß eine kleinere gleichmäßige Holzverbrennung zu Schaffen und damit das Anwendungsgebiet des Brennholzes verbreitern; däß eine aus der Brennholz gefertigter Anzünder zu schaffen; eine neue ästhetische Alternative für die Anwendung des Holzfeuers angeboten und die Räucherungsprozedur zu erleichtern. Die Erfindung, wie sie in den Ansprüchen gekennzeichnet ist, ermöglicht diese Aufgabe bei der Verbrennung der Festen Brennmaterialblöcke durch Anzündung der in einem bestimmten Abstand stehenden Brennmaterialflächen mit Hilfe des Verbrennungssockels zu lösen. Die Anzündung der mit einem bestimmten kleinen Abstand stehenden Brennmaterialflächen erfolgt an den in der Mitte befindlichen Einschnitten von unten. Hindurch wird die laterale Wärmestrahlung vermindert. Die brennende, sich gegenseitig aufheizenden Flächen, bei welchen ein Vertikales Luftdurchfluß durch die Einschnitt im Brennmaterial entsteht, wird eine gleichmäßige anhaltende Verbrennung geschaffen. Entsprechend vorbereitet und und angezündet, ist auf diese Weise eine gleichmäßige Holzverbrennung auch in Miniaturforme erreichbar. Die durch einen kleinen Abstand getrennten Holzflächen sind leicht anzündbar, insbesondere bei T - oder Kreutzförmiger Anordnung, wo entsprechend 2 oder 4 um 90° vorsetzte Brennmaterialkanten bei Anzündung gleich Feuer annehmen. Für die Räucherung wird Holz auf einem Sockel von unten angezündet. Wenn die Temperatur in der Räucherkammer die gewünschte Höhe erreicht hat, wird die Flamme zum Erlöschen gebracht. Der kleine Durchzug durch den Einschnitt (bez. Einbohrung, Abstand) genügt für ein fortdauerndes gleichmäßiges Glimmen. Von den Sockelwänden geschützt und gewärmt, glimmt das Holz fast restlos ab. Durch diese Methode gibt ein z.B. 1 dm$^3$ großer Holzblock 2,5 Stunden einen gleichmäßigen Rauchstrom ab, der ausreichend ist um eine bis 150 Liter große Räucherkammer mit Rauch zu versorgen.

Die durch die Erfindung erreichten Vorteile sind im wesentlichen darin zu sehen, daß das Anwendungsgebiet des Brennholzes verbreitet wird, und das auch auf Kosten de Fossilen Energien. Die Verbrennung der Vertikalgestellten Holzblock(blöcke) mit verschiedenen Einschnitten bietet eine neue ästhetische Alternative für die Anwendung des Holzfeuers. Im Wohnbereich sowie im Freien wird eine neue Möglichkeit für kleine und leichte Kamine angeboten. Dabei sind der Transport und die Lagerung des Brennmaterials sowie das Feueranzünden leicht und der Brennholzbedarf klein. (z.B. ein 16o cm. hoher und 0,7 dm$^3$ großer Holzblock brennt ca 4o Min. mit einer Flammenhöhe bis 35 cm.) Die geschaffene kleine Holzverbrennung ermöglicht kleine Brennholzklötze als Anzündungsmaterial für Kamin und Grillanzünder sowie als Brennmaterial für kleine mitnehmbaren Herde zu verwenden. In diesem Bereich wird es möglich das bisher oft verwendeten Öl und Gas durch Brennholz zu ersetzen. (z.B. brennt ein 0,11 dm$^3$ großer Holzblock 1o - 12 Min.) Durch die Verwendung der gleichmäßig und stabil brennenden bez. glimmende Holzblöcke beim räuchern wird die Räucherungsprozedur einfacher und die Temperatur in Räucherkammer besser kontrolierbar. Auch die Kaminvorrichtungen können mehrmals kleiner sein, als bei gebräuchlichen Räuchereien.

Die Ausführungsbeispiele der Erfindung ist in der Zeichnungen dargestellt und wird im folgenden näher beschrieben. Es zeigen:

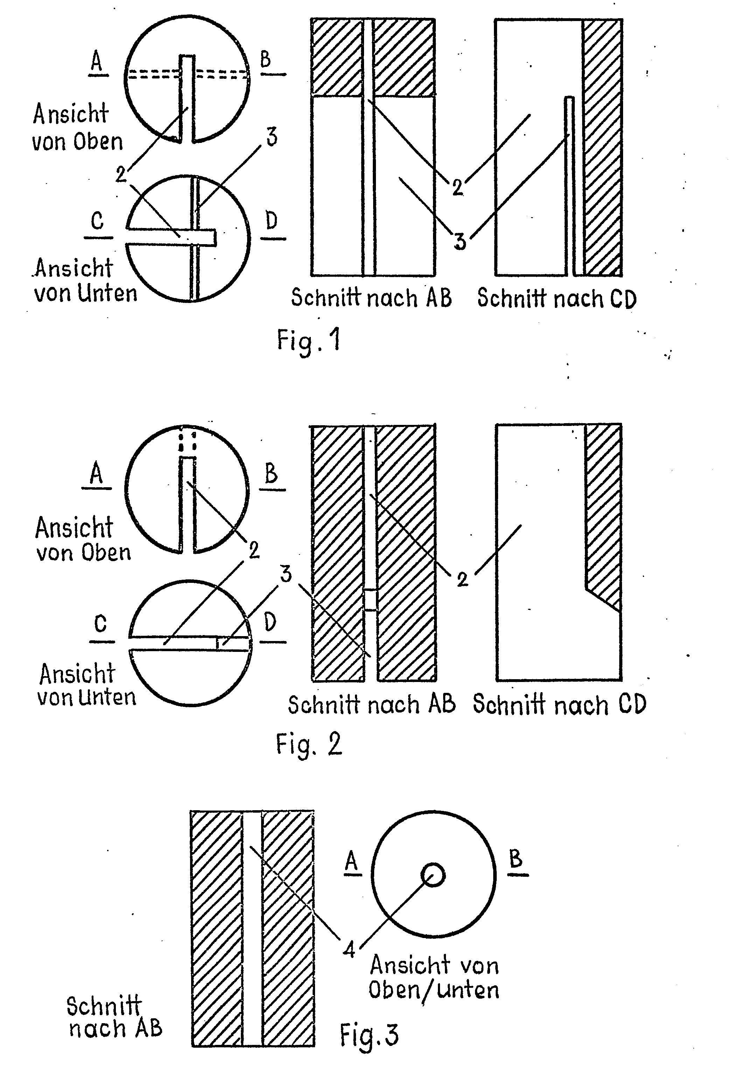

Fig. 1 und 2. Brennholzblock 1 mit in Längs- 2 und Seitenrichtungen 3 durchgehenden Einschnitten.

Fig. 3 Brennmaterialblock mit eingebohrtem Zugkanal 4 .

Fig. 4 stellt einen Verbrennungssockel 5 für einen Holzblock dar. Der Sockel beinhaltet Stützflächen 6 für Brennholz, einen Anzündungsraum 7 und Luftzuflußöffnungen 8 . Ein trockenes Anzündungsmaterial wird in dem Anzündungsraum 7 angezündet und das Holzblock mit Einschnitten (Fig. 1, 2 oder 3) auf dem Stützflächen 6 gestellt. Der brennende Anzünder zündet die Flächen des Einschnites an. Das Feuer verbreitet sich langsam, bis der Holzblock restlos abgebrannt ist.

Fig. 5 zeigt eine in einem Komplett vorgesehenem Brennholz (2 Holzklötze) 9 die je einen durchgehenden Einschnitt 2 haben und einen Kreutzförmigen Abstand (Anordnung bi... ...n

und für diesem Komplett vorgesehenen Verbrennungssockel 1o mit Stützflächen 11 für Brennholz, mit hervorragenden Teilen 12, die für die Regulation des Abstandes zwischen den vertikalen Flächen des Holzklötzes versehen sind, und mit Luftzuflußöffnungen 13.

Fig. 6 stellt eine Einrichtung für Anzündung der Holzkohle mit dem Verbrennungssockel (Fig. 5) dar. Die Einrichtung besteht aus einem Kamin 14, aus einem Gefäß (Gehäuse) 15 für Kohle mit einem Rostboden 16 und in Kamin liegende Verbrennungssockel 10 mit Brennholz 9 . Wegen den entstandenen Durchzug (Kamineffekt) wird die Kohle schnell geheizt.

Fig. 7 stellt einen Räucherholzklotz (17) mit dazugehörenden Sockel (18) mit Stützflächen (19) dar. Der Räucherholzklotz (17) wird in dem Sockel (18) von unten angezündet. Im offenen Ende des Sockels steigen die Flammen auf und heizt die Räucherkammer auf. Nach dem Ablöschen der Flammen erfolgt eine gleichmäßige Rauchentwicklung durch das Abglimmen des Räucherholzes.

Patentansprüche.

1. Verbrennung der Festen Brennmaterialsblöcke durch Anzündung der in einem bestimmten Abstand stehenden Brennmaterialflächen mit Hilfe der Verbrennungssockels.

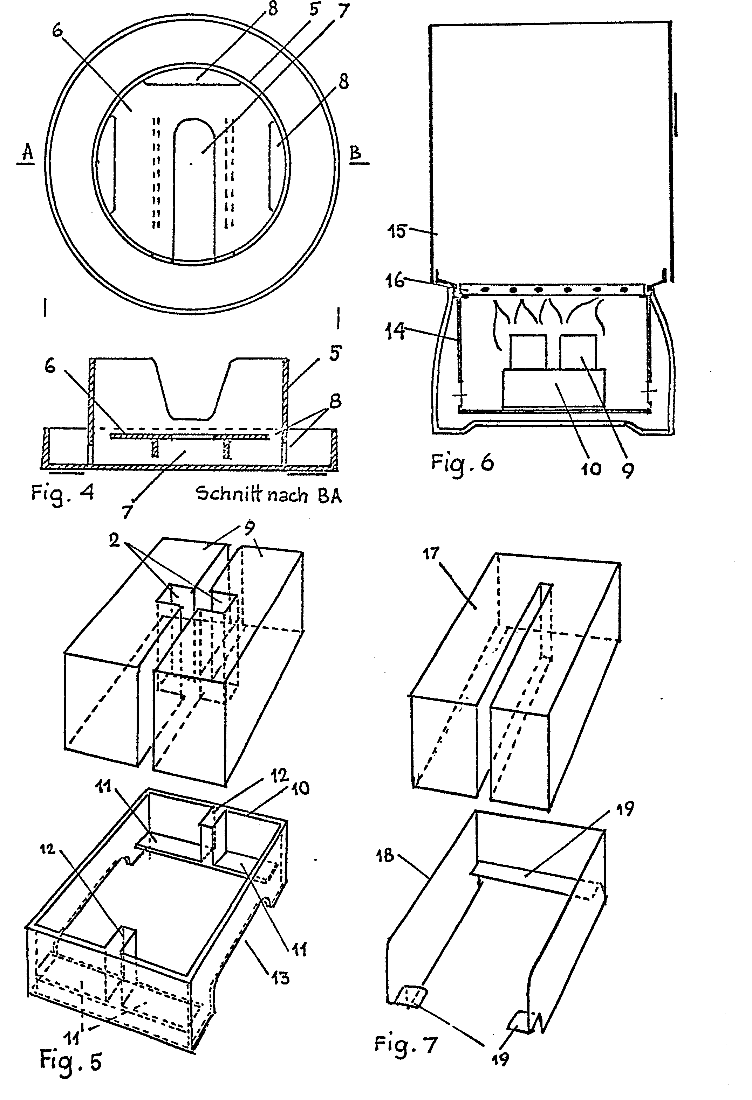

dadurch gekennzeichnet, daß ein Fester Brennmaterialblock mit durchgehendem(n) Einschnitt(en) in Längs- (2) oder Seitenrichtungen (3), oder beides und/oder mit eingebohrtem Zugkanal (4) und ein Verbrennungssockel welche die Stützflächen (6) für das Brennmaterial, die Anzündungsraum (7) und die Luftzuflußöffnungen (8) hat und für die Verbrennung des Brennmaterialblockes vorgesehen ist. (Nach Fig. 4)

2. Verbrennung nach Anspruch 1,

dadurch gekennzeichnet, daß eine auf einen Sockel gestellte und nach dessen Maße befertigte Komplett (2 oder mehr) Feste Brennmaterialblöcke (auch mit Einschnitten)(Fig. 5) die durch Zusammensetzung einen einfachen oder einen T- oder Kreutzförmigen Abstand zwischen den Brennmaterialflächen bildet, und einen Sockel (1o) der die Stützfläche(n)(11) für diese Brennmaterialblöcke und Luftzuflußöffnungen (13) sowie auch die hervorragenden Teile (12) die den Abstand zwischen den vertikalgerichteten Brennmaterialflachen reguliert, vorgesehen ist. (Nach Fig.5)

3. Verbrennung nach Anspruch 1,

dadurch gekennzeichnet, daß ein Kamin der auch mit eine reflektierende Hinterfläche bestückt sein kann, für die Verbrennung nach gekennzeichnenden Teil des Anspruchs 1 vorgesehen ist.

4. Verbrennung nach Anspruch 1,

dadurch gekennzeichnet, daß ein Herd für die Verbrennung nach gekennzeichnenden Teil des Anspruchs 2 vorgesehen ist.

5. Verbrennung nach Anspruch 1,

dadurch gekennzeichnet, daß eine Einrichtung für Anzündung der Kohle (Fig. 6), die einen oben geöffneten und mit Rostboden (16) bestücktem Gehäuse (15) hat, und Kaminvorrichtung (14) für die Verbrennung nach gekennzeichnenden Teil des Anspruchs 2 vorgesehen ist.

6. Verbrennung nach Anspruch 1, dadurch gekennzeichnet, daß ein Räucherholz nach gegennzeichnenden Teil des Anspruches 1 oder 2 befertigt ist und ein Sockel (18, Fig.7) mit Stützflächen (19) auf dem ein solcher Räucherholz (17) setzen kann, vorgesehen ist.

A B

Ansicht
von Oben

2

3

C D

Ansicht
von Unten

Schnitt nach AB    Schnitt nach CD

2

3

**Fig. 1**

A B

Ansicht
von Oben

2

3

C D

Ansicht
von Unten

Schnitt nach AB    Schnitt nach CD

2

**Fig. 2**

Schnitt
nach AB

4

A B

Ansicht von
Oben/unten

**Fig.3**

C1039C2

Fig. 4    Schnitt nach BA

Fig. 5

Fig. 6

Fig. 7